# EUROPEAN PATENT APPLICATION

(11) **EP 4 474 253 A1**
(43) Date of publication of application: **11.12.2024**
(21) Application number: 23188884.3
(22) Date of filing: 01.08.2023
(51) Int. Cl.: B62D 15/02, B60W 30/09

(54) **ACTIVE STEERING ASSISTANCE FOR VEHICLE TURNS AND PARKING MANEUVERS**

(30) Priority: 07.06.2023 US 202318331128
(71) Applicant: Aptiv Technologies AG, 8200 Schaffhausen (CH)
(72) Inventor: Mujumdar, Tapan R., Canton, MI, 48188 (US)
(74) Representative: Manitz Finsterwald Patent- und Rechtsanwaltspartnerschaft mbB

(57) **Abstract**

This document describes techniques for implementing active steering assistance for vehicle turns and parking maneuvers. A host vehicle may move on a vehicle path and detect a road barrier (e.g., a curb) with a shorter height relative a driving surface than the height of a vehicle wheel. When a collision is predicted between the road barrier and the host vehicle, a steering correction is determined for changing a vehicle direction on the vehicle path to prevent the collision. When the steering correction is within a safety threshold (e.g., safe for driving at slow speed), a steering assistance function is activated. The steering assistance function causes an adjustment to steering controls, which change the vehicle direction based on the steering correction determined to avoid the road barrier in the driving surface in time to prevent the predicted collision.

## Description

### BACKGROUND

Driver-assistance technologies are increasingly implemented in vehicles to make driving safer and/or easier. Vehicle systems provide automatic safety features (e.g., emergency braking, lane centering) using sensors focused ahead of a vehicle path. During emergency situations, the safety features activate to override or compensate driver inputs for maneuvering more effectively to avoid a crash. Some collision prevention features are ineffective at preventing collisions with smaller objects. Curbs, sidewalks, gutters, speed bumps, landscape edges, island boundaries, and other barriers can become obscured from a driver's view and/or a sensor field of view, as a vehicle approaches closer. Existing safety features may fail to prevent drivers from hitting curbs and other objects close to the ground. Small object collisions, which occur even at slow speeds, may cause uncomfortable driving, in addition to possible injury and/or damage.

### SUMMARY

This document describes techniques for active steering assistance for vehicle turns and parking maneuvers. The described techniques include examples of devices, systems, and methods, including computer-implemented processes and means for performing steps of these processes.

As one example, a method includes detecting, from a host vehicle that is moving on a vehicle path, a road barrier having a shorter height relative to a driving surface than a height of a vehicle wheel, determining whether a collision is predicted between the road barrier and the host vehicle, and determining a steering correction for changing a vehicle direction on the vehicle path to prevent the collision. The method further includes determining whether the steering correction is within a safety threshold for activating a steering assistance function to avoid the road barrier, and activating the steering assistance function when the steering correction is within the safety threshold to adjust steering controls that change the vehicle direction based on the steering correction.

This Summary introduces simplified concepts related to active steering assistance for vehicle turns and parking maneuvers and is further described in the Detailed Description and Drawings. This Summary is not intended to identify essential features of the claimed subject matter, nor is it intended for use in determining the scope of the claimed subject matter.

### BRIEF DESCRIPTION OF THE DRAWINGS

The details of one or more aspects of active steering assistance for vehicle turns and parking maneuvers are described in this document with reference to the following figures. The same numbers are often used throughout the drawings to reference like features and components:
FIGS. 1-1 to 1-4 illustrate example situations for controlling vehicles using active steering assistance for vehicle turns and parking maneuvers, in accordance with the described techniques;
FIG. 2 illustrates an example operating environment for a vehicle equipped with an active steering assist system used to improve vehicle turns and parking maneuvers, in accordance with the described techniques;
FIG. 3-1 illustrates an example process for activating active steering assistance for vehicle turns and parking maneuvers, in accordance with the described techniques;
FIG. 3-2 and 3-3 illustrate example processes performed in furtherance of the active steering assistance activation in the process of FIG. 3-1; and
FIGS. 4-1 to 4-3 illustrate example processes of determining a steering correction, in accordance with the described techniques and in furtherance the active steering assistance activation in the process of FIG. 3-1.

### DETAILED DESCRIPTION

### OVERVIEW

Curbs are used to manage water run-off and to designate boundaries for pedestrian or vehicle travel paths, including parking lots, landscape islands, sidewalks, road lanes, and the like. Curbs, sidewalks, gutters, speed bumps, landscape edges, island boundaries, and other driving surface edge designators or barriers can become obscured from a driver's view and/or a sensor field of view, as a vehicle approaches closer. Most passengers or drivers have at some point experienced a sudden, potentially frightening, driving experience when the car accidentally drives over, clips, hits, or scrapes a curb. Collisions with curbs or other driving boundaries (commonly referred to as "curb checks") happen regularly, often under vehicle acceleration. Besides being uncomfortable to passengers, even at slow speeds, colliding with a curb or other like object can damage or cause extra wear to the vehicle and/or nearby property. Curb collisions may occur more frequently with inexperienced drivers or experienced drivers operating unfamiliar vehicles. For example, if a person is used to driving a small car (e.g., having a short wheelbase) and instead, rents or uses a large van, sport utility vehicle (SUV), pickup, or truck, they may not realize how their driving style needs to adjust because of a longer wheelbase. Different steering inputs are needed depending on vehicle size, direction, and wheel-to-curb proximity to avoid accidentally making too wide or sharp of a turn when driving in tight spaces or parking.

For example, consider a driver planning to pull out of a shopping center and merge into traffic. The driver sets the vehicle up to make a sharp right turn from a parking exit to merge into a far-right lane of a road. The right edge of the driving surface at the exit is bounded by a short curb (e.g., a few inches less than a vehicle bumper height). The curb complements a similar-sized curb running perpendicular to the exit to indicate an outer right edge of the driving surface of the road or to delineate a separate sidewalk or shoulder region located beyond the outer edge of the road. Due to their short elevations relative to the driving surface, the curbs become increasingly difficult to see from the driver's seat as a vehicle approaches closer. As the driver prepares to drive out of the shopping center, oncoming traffic approaches in an adjacent lane. The driver may worry too much about not steering too wide to keep the vehicle in the right lane, and inadvertently steer too much because the driver did not realize the close proximity with the curb. In turning a steering wheel too sharp to avoid making a wide turn, the driver causes a rear tire or wheel of the vehicle to collide with or drive over the curb.

As another example, consider a driver searching for a parking spot near the shopping center. An empty parking spot may be located at the end of a row in a parking lot or along a side of a road, which is bounded on at least one side by a landscape curb to protect grass and garden islands planted adjacent to the parking spot. The curb is elevated a few inches above the spot. After finding a spot, the driver sets the vehicle up to drive or back into the spot. The parking spot may or may not require a parallel parking maneuver. As the driver maneuvers in tight spaces provided between the curb and other parking spots and vehicles, the driver may worry about avoiding a collision with another parked car or other cars in traffic. Like in the other example, the curb near the spot becomes increasingly difficult to see from a driver seat as a vehicle approaches closer. In steering the vehicle in these tight spaces, to park in the empty spot, the driver can cause the vehicle to hit or scrape the curb by driving too close to the edge of the spot (e.g., straightening out too late often causes tires and rims to hit the curb). Even a minor scrape with a curb can cause significant damage to wheels and/or tire punctures, which are costly to replace.

In either of the above situations and many other everyday driving experiences like them, existing vehicle systems are ineffective at helping drivers avoid collisions with curbs and other objects close to the ground. Deployment of certain safety features may be restricted to only occurring in emergency situations and may even be inoperable in situations involving low-speed collisions with small curbs. Automatic emergency braking (AEB) is a safety feature that automatically engages the vehicle brakes at the last moment when an inattentive driver has to react to prevent a collision. A forward collision warning (FCW) can precede the AEB to try and make the driver aware of the situation sooner, however, no steering assistance is given when the AEB is activated. A predictable collision may go undetected or unreported unless the vehicle is moving at or above a speed threshold (e.g., set to be faster than expected for parallel parking, for pulling into or out of a parking spot or garage, for staying in a single lane when following a sharp curve or making a right-angle turn). When driving at slow speeds, collision predictions with short objects or curbs are suppressed by the AEB / FCW to allow drivers freedom to use their own discretion to drive safely without triggering an emergency intervention.

Functions like automated lane centering, blind spot monitoring, autonomous driving, and adaptive cruise control may provide steering controls or steering assistance. However, the steering assist is only to maintain lane control to prevent emergency situations involving other large objects (e.g., vehicles and pedestrians) in traffic. Any steering corrections provided by existing systems are in response to an emergency when driving on roads (e.g., at or near posted speed limits) where a collision with another large object is predicted and the corrections are to cause the vehicle to change course and veer as far as possible from the other object. Their activation at slow speeds or in crowded environments or tight spaces may cause too many false emergency interventions, which may overwhelm a driver or a vehicle's computing resources and reduce vehicle safety. Further, these features may have a limited field of view or inability to detect short objects in proximity to the vehicle.

Other functions may provide braking assistance, but not steering assistance, to drivers at slow-speeds. A parking assistance function or a reverse assistance function may activate when driving slowly to park a vehicle, but only to abruptly stop the vehicle before a collision with a tall object (e.g., higher than a bumper height, a vehicle barrier, a pole). A longitudinal assist feature may be provided in this case, however, for parallel parking and maneuvering in other tight spaces, these features do not actively prevent wheels from scraping or hitting a curb through corrective steering. Guidance markers output in a driver interface (e.g., on a display, in a windshield projection) may indicate to the driver that a collision may occur if a vehicle path is continued. However, in guidance marking, only predicted wheel paths are shown, with no indication of steering corrections or the ability to actively steer to prevent the collision.

Various limitations with existing collision avoidance vehicle safety features prevent them from being useful for avoiding collisions with short objects. Some may execute brake-assist functions to engage vehicle brakes or interrupt accelerator controls, however, existing systems are not operable to correct steering inputs from drivers. Without having steering assistance in either of the driving situations described above, the drivers are either allowed to cause their vehicles to drive over the curbs, or their vehicles are abruptly stopped in the middle of a maneuver. The first results in damage and/or injury, and the latter may cause more harm than benefit. A sudden stop may surprise or confuse drivers and cause avoidable accidents if the vehicles are allowed to complete their maneuvers and go over the curb.

In contrast, an active steering assist is automatically engaged in scenarios where drivers tend to clip curbs. Specifically, where brake assistance alone cannot prevent a curb collision, the active steering assist compensates steering wheel inputs from drivers to determine a steering correction to prevent wheels and tires of the vehicle from contacting the curb. A host vehicle may move on a vehicle path and detect a road barrier (e.g., a curb) with a shorter height relative a driving surface than the height of a vehicle wheel. When a collision is predicted between the road barrier and the host vehicle, a steering correction is determined for changing a vehicle direction on the vehicle path to prevent the collision. When the steering correction is within a safety threshold (e.g., safe for driving at slow speed), a steering assistance function is activated. The steering assistance function causes an adjustment to steering controls, which change the vehicle direction based on the steering correction determined to avoid the road barrier in the driving surface in time to prevent the predicted collision.

The driver is allowed to maneuver in close proximity to curbs more effectively without fear of a sudden braking interference. The active steering assist can provide steering adjustments, e.g., without brake assist, when a slight correction is needed to prevent a collision with a curb and the vehicle wheels. Explained below are just some examples of the described techniques for active steering assistance for vehicle turns and parking maneuvers. These examples can be combined in different ways to implement the described techniques, including for a particular application, vehicle hardware architecture, or driving context.

### DRIVING SITUATIONS

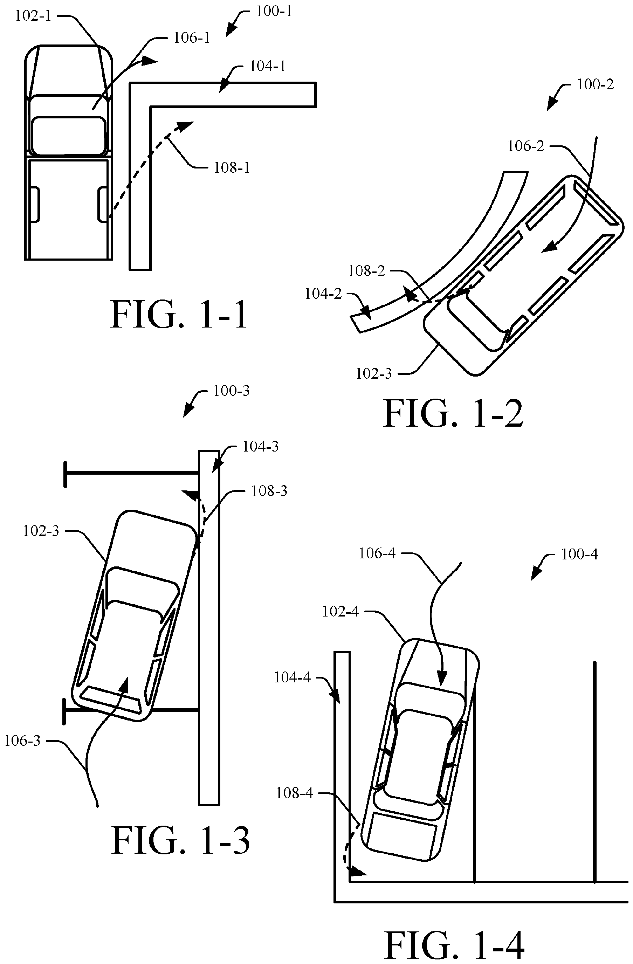

FIGS. 1-1 to 1-4 illustrate example situations for controlling vehicles using active steering assistance for vehicle turns and parking maneuvers, in accordance with the described techniques. Each of FIGS. 1-1 to 1-4 shows an environment 100 (respectively labeled as environments 100-1, 100-2, 100-3, and 100-4) involving different driving situations where a vehicle 102 may slowly maneuver (e.g., to park or turn in traffic) on a driving surface (e.g., a paved surface, a dirt surface, a road surface, a parking spot of a parking lot or garage) of a vehicle path 106 (respectively labeled as vehicle path 106-1, 106-2, 106-3, and 106-4), which includes a road barrier 104 (respectively labeled as road barrier 104-1, 104-2, 104-3, and 104-4) used to designate edges of the vehicle path and limits of the driving surface. A vehicle 102 in the environment 100 (respectively labeled as vehicle 102-1, 102-2, 102-3, and 102-4) is drawn and described in relation to different types of vehicles and driving situations. However, each situation generally applies to most all vehicle types and frequently occurring driving situations, where at slow speed, a driver may oversteer or understeer and accidentally collide with a curb. For example, FIG. 1-1 includes a vehicle 102-1 depicted as a pickup truck, FIG. 1-2 shows a vehicle 102-2 as a large van, FIG. 1-3 has a vehicle 102-3 that is a compact car, and a vehicle 102-4 is drawn in FIG. 1-4 to represent a midsize sedan. When driving slowly to make a right-hand turn, maneuver around a curve, or park the vehicle 102, a driver's steering inputs may be on the verge of causing one or more vehicle wheels to impact the road barrier 104 (e.g., a curb). A wheel path 108 (respectively labeled as wheel path 108-1, 108-2, 108-3, and 108-4) of the vehicle 102 may be on a collision course with the road barrier 104 if the driver continues on the vehicle path 106.

The road barrier 104 provides a physical boundary between the driving surface and a pedestrian path, an unpaved region, or other driving surface for another vehicle path or lane (e.g., at a three or four way intersection, around a roundabout). Sized and shaped differently in each of FIGS. 1-1 to 1-4, the road barrier 104 is labeled, respectively, as road barrier 104-1, 104-2, 104-3, or 104-4. Sometimes referred to as a curb, the road barrier 104 may be a post, a block, a guard rail, or stationary portion of any ground object that has a height or elevation close to the ground, and which makes the road barrier 104 difficult to see from a driver seat as the vehicle 102 approaches closer.

Turning to FIG. 1-1, the environment 100-1 depicts a driving scenario where the vehicle 102-1, which being a pickup truck tends to have a longer wheelbase, is stopped at an intersection (e.g., a driver of the vehicle 102-1 is getting ready to exit a shopping center and enter a traffic lane, which requires a sharp turn (e.g., right-angle, sharp-angle, right-hand, left-hand) to drive around the road barrier 104-1 without a collision. The road barrier 104-1 provides a transition or boundary for a vehicle path 106-1 on a road surface; as the vehicle 102-1 moves along the vehicle path 106-1, driver inputs are used to operate vehicle steering control to navigate the vehicle 102-1 to avoid a curb collision. FIG. 1-2 shows a similar situation to FIG. 1-1; the environment 100-2 shows the vehicle 102-2 driving around a sharp curve (e.g., in a roundabout) on a vehicle path 106-2 that is bounded on an outside edge by the road barrier 104-2. Being a large van, the driver of the vehicle 102-2 may have difficulty driving around the road barrier 104-2 without hitting or clipping the road barrier 104-2.

FIGS. 1-3 and 1-4 show other, typical driving scenarios that involve maneuvering near curbs that are positioned on driving surfaces in tight spaces. The environment 100-3 in FIG. 1-3 includes the vehicle 102-3 moving on a vehicle path 106-3 to parallel park by pulling forward into a spot that is flanked by the road barrier 104-3. FIG. 1-4 shows a slightly different parking situation with the environment 100-4 depicting a driver of the vehicle 102-4 trying to back into an empty parking spot by following a vehicle path 106-4, which has two sides bounded by the road barrier 104-4. Similar situations occur if the vehicles 102-3 or 102-4 drive in opposite directions to enter their respective spots with an opposite vehicle end than what is shown. For example, the vehicle 102-3 in the environment 100-3 may likewise, back into a parking spot to parallel park; the vehicle 102-4 may pull forward to enter a parking spot. The vehicle 102-3 and the vehicle 102-4 may each have a shorter wheelbase, and greater maneuverability to turn or corner in these tight spaces, than either the vehicle 102-1 or the vehicle 102-2. Drivers of the vehicle 102-3 or the vehicle 102-4 may still have difficulty when parking judging proximity of the road barrier 104-3 and 104-4. Driving too close to the road barrier 104-3 or the road barrier 104-4 may occur because of an obscured driver view of the vehicle path 106-3 or 106-4. As the vehicle 102-3 moves on the vehicle path 106-3 towards the road barrier 104-3, the road barrier 104-3 becomes more difficult to see and eventually may be obscured from the driver view The driver of the vehicle 102-4 may be unable recognize that a steering correction is needed to avoid a collision with the road barrier 104-4 when driving too close, particularly when in reverse and the road barrier 104 is tall enough to do damage from a collision, but too short to be viewed in a backup camera or traditional backup assist function used to cause a sudden stop.

When trying to park, the drivers may be allowed to inadvertently steer the vehicle 102-3 or the vehicle 102-4 on a collision course with the road barrier 104-3 or the road barrier 104-4. The vehicle 102-3 or the vehicle 102-4 may drive into, or over, the road barrier 104-3 or the road barrier 104-4. In either situation, the vehicle 102-3 or the vehicle 102-4 may scrape a wheel or tire. The drivers may be embarrassed in having to maneuver in several directions to move back and forth into and out of traffic to safely position and park within a parking spot (e.g., at a legal distance from a curb). Extra maneuvers can lead to other accidents with vehicles traveling past the parking location, and may also impact pedestrian safety, particularly if an accident results in vehicles stopped on pedestrian paths adjacent travel paths of other vehicles (e.g., buses, bicycles, motorcycles, carpools).

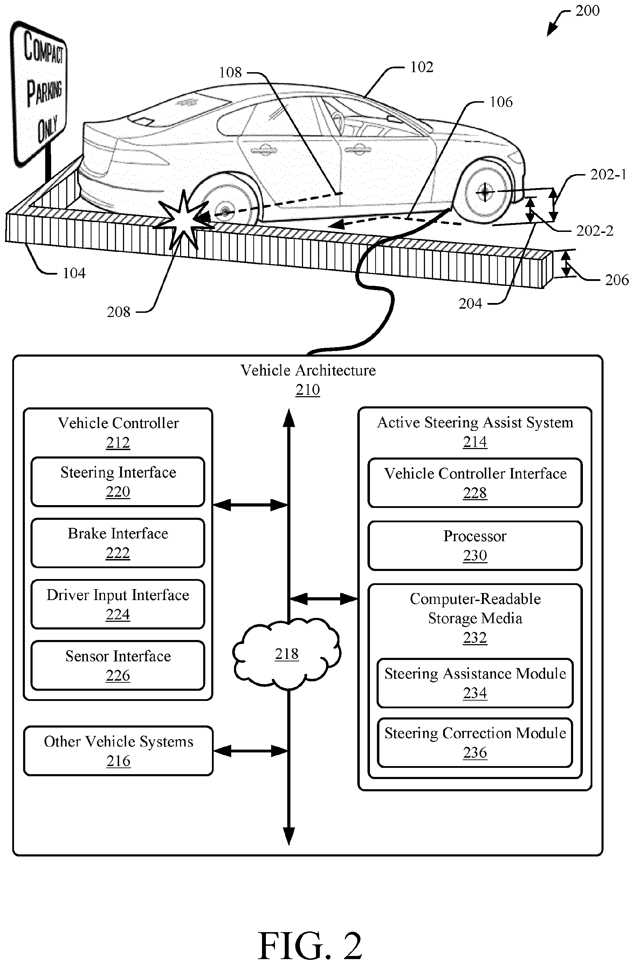

Consider each of these and many others similar driving situations, where the vehicle 102 may slowly maneuver on the driving path 106, in proximity to the road barrier 104. A sidewalk, a pedestrian path, a bike lane, or another lane of vehicle traffic may be in a region of the environment 100, which is protected by the road barrier 104. A collision with a road barrier may be loud and sudden, which can scare passengers, other drivers, and pedestrians, in addition to causing property damage or bodily injury. To prevent these collisions, and as illustrated in greater detail in FIG. 2, the vehicle 102 is equipped with a vehicle system (e.g., a vehicle controller) configured to automatically enable a steering assistance function (e.g., of an active steering assistance system) to compensate driver steering inputs with a steering correction predicted to avoid a collision with the road barrier 104.

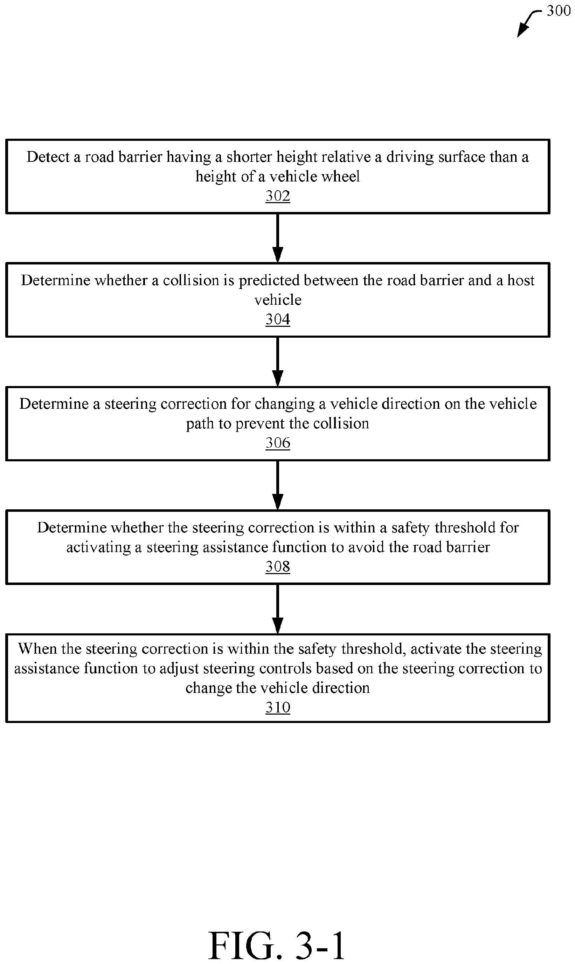

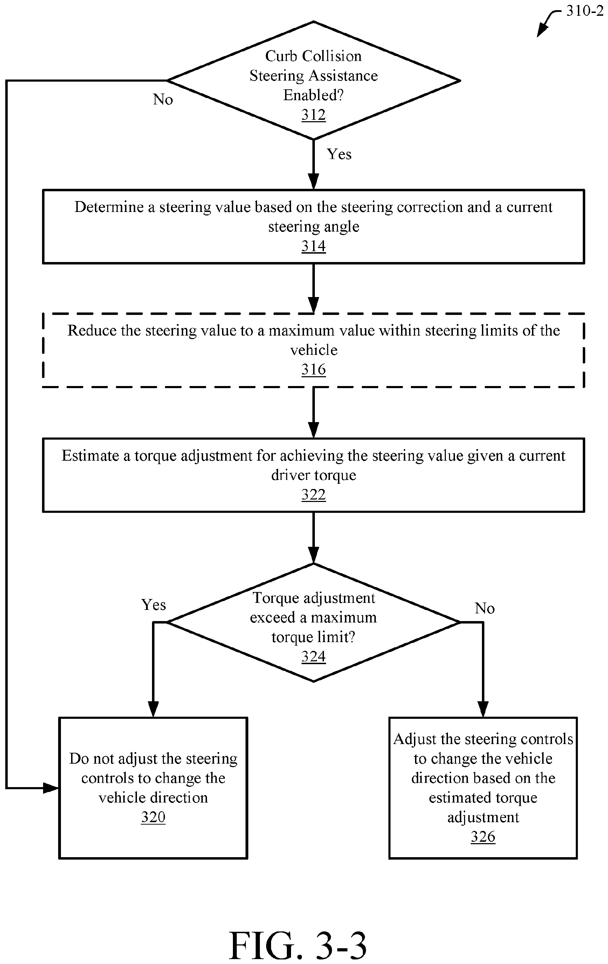

In general, the steering assistance function causes a vehicle controller to apply a predicted steering correction when driving at slow speeds (e.g., too slow for AEB) and without applying brake controls that interrupt a driver maneuver. In other words, the steering assistance function is activated in situations where minor steering corrections are predicted to prevent an impending collision with a curb. FIGS. 3-1 to 3-3 shows details of example processes for preventing curb collisions using active steering assist. For example, the vehicle 102 is moving on the vehicle path 106 and detects the road barrier 104, which generally has a shorter height relative a driving surface than a height of a vehicle wheel or other part of the vehicle 102. The vehicle system engages the steering assistance function based on information obtained or derived from sensors of the vehicle 102. The steering assistance function may be activated in response to receiving an indication of a predicted collision with the road barrier 104, given the trajectory of the vehicle 102 on the vehicle path 106.

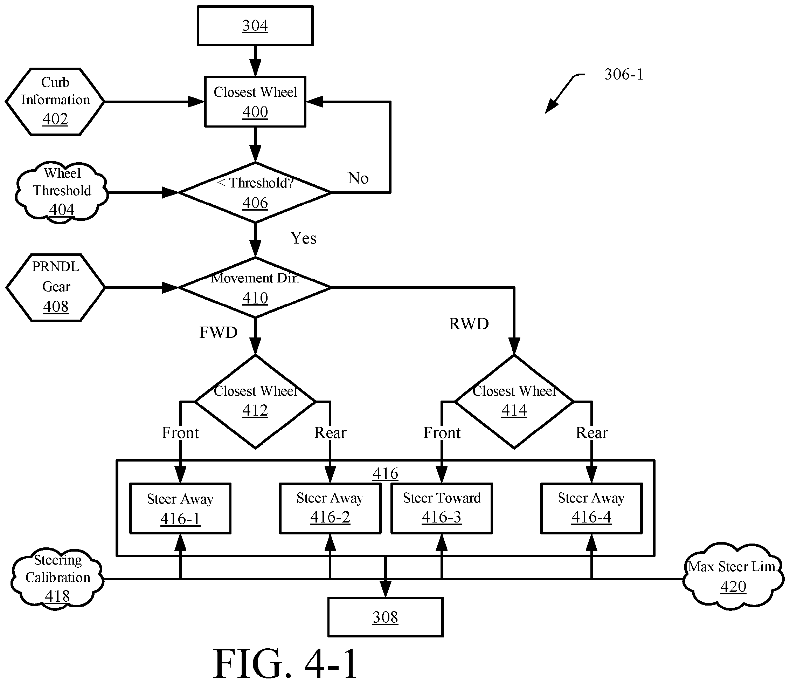

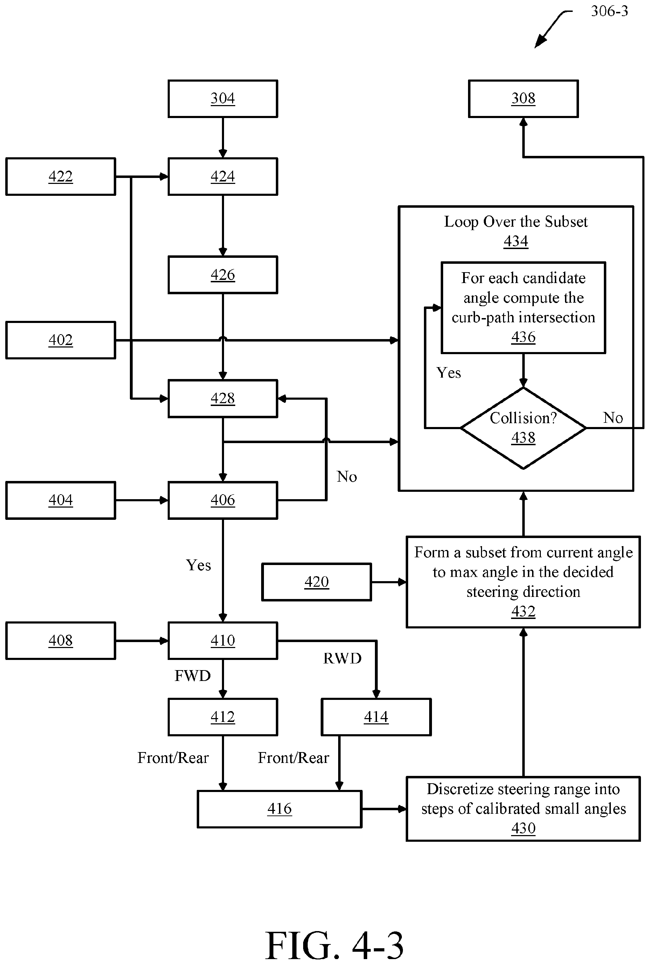

When a collision with a curb is predicted, a steering correction for changing a vehicle direction on the vehicle path 106 to prevent the collision is determined. For example, upon activation, the steering assistance function may identify a steering correction that is used by the vehicle controller to cause the wheel path 108 to change steering angle and avoid clipping the curb. In general, the steering assistance function may determine an assist to apply as a steering correction to a driver steering input (e.g., from a steering yoke, from a steering wheel) . The steering correction may be based on different factors, such as, whether the vehicle is moving forward or in reverse gear, a distance to a nearest wheel and the predicted collision, an estimated driver input or steering angle of the nearest wheel, steering limits and/or torque limits of the vehicle 102 steering system and suspension, or other factors, including other vehicle or environment conditions for ensuring the steering correction is in furtherance of safe driving without increasing a risk of causing other accidents. From sensor information indicating a predicted collision with the road barrier 104, a steering correction to apply to the driver input is determined. A steering correction may be determined for causing the wheel path 108 to change steering angle, without changing speed on the driving path 106, and still avoid the collision. FIGS. 4-1 to 4-3 show detailed example processes for determining the steering correction needed to prevent the collision.

Prior to activating (e.g., outputting to a vehicle controller) the steering correction to apply to the steering controls to correct the driver steering inputs to prevent the collision. The steering assistance function of the vehicle 102 may determine whether it is safe to apply the steering correction. A current driving speed may be too fast to prevent a collision except for too great a steering correction, which might prevent vehicle damage but cause driver or passenger injury from the large sudden change. For example, the steering assistance function is enabled for activation to prevent low speed collisions with short objects, where the vehicle 102 may drive over or scrape a curb and damage the vehicle 102. Safety considerations may cause the steering assistance function to refrain from activating and not apply the steering correction in some situations, whereas in other situations the activation is allowed. Non-vehicle factors, like road conditions (e.g., dry, wet, paved, gravel) and safety of nearby pedestrians and other vehicles may be considered before applying a steering correction. The steering assistance function determines whether the steering correction is within one or more safety thresholds for automatically steering to avoid the road barrier, without risking injury or causing other accidents and damage.

All of this is in contrast to how existing automatic emergency braking and other existing systems like lane centering systems and traditional brake assistance are enabled. Existing systems cannot prevent curb collisions with determining steering corrections. Their deficiencies are in part due to their focus on avoiding large object collisions in and among moving traffic and/or relying only on stopping or decreasing longitudinal momentum of the vehicle 102 with brake controls.

As one example, for high speed or traffic situations, existing systems are configured to detect large objects at a far ranges; that is, existing systems mainly prevent collisions with objects that are larger or taller than a curb (e.g., a wall or tall pole), which can cause great damage or bodily injury. As another example, for slower speed situations, like pulling into a garage, existing systems mainly prevent collisions with other objects that are taller than a curb. Ultrasonic sensors and/or cameras positioned at bumper height can be used to detect a pole or floor-to-ceiling wall in proximity to the vehicle. Their sensors cannot be used to determine whether a vehicle wheel may collide with a short cub or foundation at the base of the wall or a pole cut shorter than the vehicle wheel. This is because their position on the vehicle 102 relative to the driving surface may limit a field of view to not include elevations that are near the driving surface (e.g., below a bumper height, below a mounting position). The sensor systems tend to exclude regions that are further from the bumper height and closer to the ground where a curb may be detected with a curb height that is only a few inches tall. Existing systems are configured to detect and prevent collisions to objects that are further from the vehicle 102 than a safe and/or legal parking distance from a curb. Even if curbs are detected, existing systems do not intervene with steering controls and focus on letting the driver steer without assistance, to execute functions for stopping a vehicle's momentum with brake controls instead, to avoid hitting a stationary object on the ground.

Existing systems provide little or no consideration for correcting driver steering inputs or providing active steering assistance of any kind, to prevent curb collisions like those described herein. This is despite the fact that in some cases, collisions with the objects may be avoided with only a subtle steering corrections that do not interrupt the vehicle's momentum. While existing systems may excel in other driving situations to improve vehicle safety, they do little to avoid low-speed (e.g., maneuvering at idle speed, less than a few miles or kilometers per hour) collisions with short ground objects, which become more difficult to see the closer a vehicle approaches.

When the steering correction is within the safety threshold to adjust steering controls, then the vehicle system activates the steering assistance function to allow a vehicle controller to rely on the steering correction in controlling the vehicle 102. The steering assistance function immediately notifies a vehicle controller to provide a correct steering angle or a steering correction that compensates a current driver provided steering angle, to achieve sufficient clearance between the vehicle 102 and the road barrier 104 to prevent the predicted collision.

The steering assistance function may limit steering corrections to subtle steering corrections, which have a low risk of scaring the driver but are likely to prevent a collision. This active steering assistance, which is provided without engaging brakes, may enable the vehicle 102 to maneuver more smoothly and safer around the road barrier 104 (e.g., as shown in FIGS. 1-1 and 1-2) or when parking (e.g., as depicted in FIGS. 1-3 and 1-4). The steering assistance function may improve driving safety without inhibiting driver confidence or ability to maneuver in and around tight spaces and curbs. The steering correction determined by the steering assistance function may gracefully prevent an impact between a wheel, body panel, or other expensive part of the vehicle 102 and the road barrier 104 (e.g., a curb).

### OPERATING ENVIRONMENT AND VEHICLE ARCHITECTURE

FIG. 2 illustrates an example operating environment for a vehicle equipped with an active steering assist system used to improve vehicle turns and parking maneuvers, in accordance with the described techniques. FIG. 2 is described in the context of the environment 100, including the vehicle 102 maneuvering slowly close to the road barrier 104 on a trajectory that is predicted to cause a wheel collision.

FIG. 2 shows an environment 200, which is an example of the environment 100, and shows the vehicle 102 to have a wheel height 202-1 relative a location on a vehicle wheel above a driving surface 204. The vehicle 102 also has a ground clearance 202-2 relative a bumper or under side of the vehicle 102 and the driving surface 204. The driver of the vehicle 102 in the environment 200 is steering in reverse to back the vehicle along the driving path 106 on the driving surface, to move further into a parking spot adjacent to the road barrier 104.

The road barrier 104 may be formed of various rigid materials (e.g., metal, concrete, rock, brick, asphalt, soil) to provide a barrier height 206, with a shorter height, relative to the driving surface 204, than a height of one or more parts of the vehicle 102. The barrier height 206 causes the road barrier 104 to be obscured from the driver seat as the vehicle 102 steers along the driving path 106. The driver seat of the vehicle 102 is at a higher elevation than the road barrier 104 with respect to the ground, which causes parts of the vehicle 102 to obscure the road barrier 104 from the driver seat as the vehicle 102 approaches closer. For example, at least one stationary portion of the road barrier 104 may have a height that is less than the wheel height 202-1, the ground clearance 202-2, a chassis height, a bumper height, a hood height, a panel height, a windshield height, a brush guard height, a side mirror height, or height of any other part of the vehicle 102, which blocks the road barrier 104 from a driver view

Based on the wheel path 108 predicted for the vehicle 102, a collision 208 between the vehicle 102 and the road barrier 104 is predicted. In this case, if the barrier height 206 is low enough, e.g., lower than the wheel height 202-1, then the vehicle 102 may be able to easily drive over the road barrier 104, provided the vehicle 102 approaches with sufficient speed and momentum. If the ground clearance 202-2 is lower than the barrier height 206 of the road barrier 104, the collision 208 that results can damage a body panel or undercarriage of the vehicle 102. Hitting a curb at any angle can cause suspension and alignment issues, not to mention damage to the body, drive train, and tires or wheels, which are expensive to fix or replace.

An example of a vehicle architecture 210 for supporting various computing components, devices, and/or systems that are operable on the vehicle 102 is shown in FIG. 2. A vehicle controller 212, an active steering assistance system 214, and one or more other vehicle systems 216 may communicate (e.g., exchange data) over a vehicle network 218 to execute vehicle functions and enable vehicle maneuvers.

The vehicle controller 212 may include one or multiple components configured to control vehicle movements and other vehicle functions. For example, the vehicle controller 212 may include one or more processing units that have a steering interface 220 to a steering system that controls wheel direction while driving. A brake interface 222 may be operable with the vehicle controller 212 to cause brakes to be applied that slow the vehicle 102. The vehicle controller 212 further includes a driver input interface 224, which processes driver inputs obtained from steering wheel inputs, pedal inputs, and other driver inputs to vehicle controls. In addition, a sensor interface 226 provides sensor information to the vehicle controller 212 based on sensor data captured by sensors of the vehicle 102 and/or sensors of other vehicles and infrastructure (e.g., using vehicle-to-everything communication). Likewise, a motor controller or an engine controller that provides a motor or engine interface to the vehicle controller 212 may enable manipulation of vehicle motor or engine output. A transmission controller may provide a transmission interface to the vehicle controller 212 for enabling data exchanged about a drive mode or gear selection.

The other vehicle systems 216 can include various vehicle components. As some examples, the other vehicle systems 216 include the physical buttons, levers, switches, steering wheel, pedal, and the like, which relay driver inputs to the driver input interface 224. The steering system controlled from the steering interface 220, the braking system controlled from the brake interface 222, and the sensors used to capture sensor information provided to the sensor interface 226, are further examples of the other vehicle systems 216.

The vehicle network 218 may be a single vehicle network or be formed of multiple networks, which can include wired, wireless, or a combination of wired and wireless links. The links of the vehicle network 218 form connections between the various components of the vehicle architecture 210, which enable information to be transferred among components within and/or external to the vehicle 102. As shown, the vehicle controller 212, the active steering assistant system 214, and the other vehicle systems 216, are communicatively coupled with each other based on connections formed through the vehicle network 218. The vehicle controller 212 may exchange data with the active steering assist system 214 by sending information about the vehicle 102 and further about detected objects reported to the sensor interface 226. When a predicted curb collision can be prevented through steering adjustments, the vehicle network 218 may enable the vehicle controller 212 to receive steering corrections from the active steering assist system 214.

The active steering assist system 214 includes a vehicle controller interface 228 for exchanging data with the vehicle controller 212, including for outputting a steering correction determined to prevent a collision without applying the brakes. The active steering assist system 214 further includes at least one processor 230 and/or computer-readable storage media (CRM) 232 to support a steering assistance module 234 and a steering correction module 236.

The at least one processor 230 may be a hardware processor, a processing unit, a central processing unit, a graphics processing unit, a processing core, a virtual processor, or other component configured to execute instructions for providing active steering assistance in accordance with the described techniques. The CRM 232 may be volatile or non-volatile storage component (e.g., a memory, long-term storage unit, short-term storage unit), which maintains the instructions executed by the processor 230. The steering assistance module 234 and/or the steering correction module 236 may be software or firmware executable programs with respective instructions maintained by the CRM 232 for subsequent execution by the processor 230. In other cases, the steering assistance module 234 and/or the steering correction module 236 may be configured to execute routines through programmable hardware logic for performing operations of the steering assistance module 234 and the steering correction module 236.

The steering correction module 236 and the steering assistance module 234 are described in greater detail below with respect to the processes of FIGS. 3-1 to 4-3. The vehicle controller 212 may engage the steering assistance module 234 by sending information obtained from the sensor interface 226, indicating object detections near the vehicle 102.

The information sent from the vehicle controller 112 to the active steering assistance system 214 via the network 218 may include information obtained from the sensor interface 226, the steering interface 220, and/or the driver input interface 224, about driving conditions of the vehicle 102 and the environment 200. This can also include information obtained from the other vehicle systems 216. Based on the information collected by the vehicle controller 212 and distributed to the active steering assistance system 214, the steering assistance module 234 may determine a trajectory of the vehicle 102 on the vehicle path 106, and whether a collision is predicted between the road barrier 104 and the vehicle 102. The steering correction module 236 may be activated in response to receiving an indication of the predicted collision with the road barrier 104 to determine a steering correction that can be applied to steering controls of the vehicle 102 to avoid the collision. The vehicle controller 112 may receive an indication of a corrected steering angle or torque for changing the wheel path 108 and prevent damage to the road barrier 104 and/or the vehicle 102.

### PROCESS FOR IMPLEMENTING ACTIVE STEERING ASSISTANCE

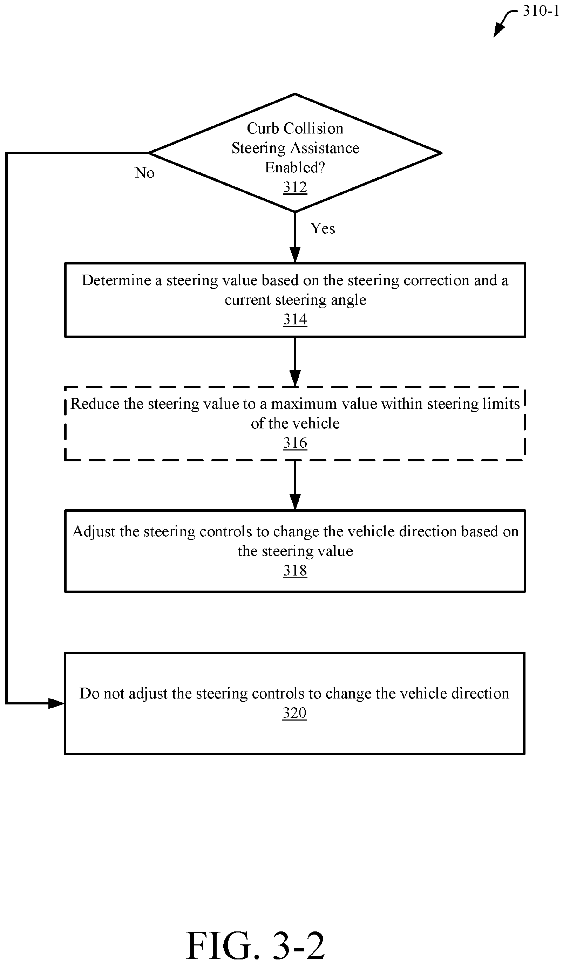

FIG. 3-1 illustrates an example process for activating active steering assistance for vehicle turns and parking maneuvers, in accordance with the described techniques. A process 300 shown in FIG. 3 includes a series of steps, which are numbered as steps 302 to 310. The process 300 may include additional or fewer steps than those shown, including the steps arranged in different orders. The process 300 is described in the context of the previous drawings and their element descriptions. For example, the process 300 is executed by at least one processor of the vehicle 102 or the vehicle architecture 210. The vehicle controller 212 and/or the processor 230 may be operable to execute the process 300 using the steering assistance module 234 and the steering correction module 236.

At step 302, a road barrier having a shorter height relative a driving surface than a height of a vehicle wheel is detected. For example, the vehicle 102 includes a radar sensor and camera system with a field of view capturing objects detected on the driving surface 204, as the vehicle 102 approaches the road barrier 104 on the vehicle path 106. The vehicle controller 212 may receive or determine a closing distance (e.g., radar range) and an elevation (e.g., image based height) for the road barrier 104.

At step 304, whether a collision is predicted between the road barrier and a host vehicle is determined. For example, based on a current vehicle trajectory on the vehicle path 106, the vehicle controller 112 may receive a collision alert from an object detection function executed by the vehicle controller 212 or one of the other vehicle systems 216, indicating the closing distance to the road barrier 104 is approaching zero.

At step 306, a steering correction for changing a vehicle direction on the vehicle path to prevent the collision in response to determining that the collision is predicted. The steering correction may be determined in one or more different ways, including from executing example processes 306-1 to 306-3, as shown respectively in FIGS. 4-1 to 4-3. For example, the vehicle controller 212 may determine a vehicle speed at the collision 208. The steering correction determined at the step 306 may be determined based in part on the vehicle speed.

At step 308, whether the steering correction is within a safety threshold for activating a steering assistance function to avoid the road barrier is determined. The vehicle controller 212 is configured to actively refrain from engaging the brake controls of the vehicle 102 if the steering correction can be applied. For example, the safety threshold for activating the steering assistance function may be set based at least in part on whether the vehicle speed is slow enough to not cause a greater accident than if the collision 208 were allowed to occur. Based on a vehicle speed at the collision 208, and whether the steering correction is within the safety threshold for activating the steering assistance function, may include determining whether the vehicle speed satisfies a slow-speed threshold.

The slow-speed threshold may correspond to a vehicle idle speed (e.g., when parking or driving in a parking lot or tight spaces) or at a slightly faster speed to search a parking lot or turn a corner and merge into traffic. For faster driving situations, the AEB, and other lane centering or collision avoidance functions may be more effective at ensuring safe driving. In these other fast moving driving situations, (e.g., when driving among traffic, faster than idle, more than a few miles or kilometers per hour) a steering corrections determined for avoiding a curb may have potential to cause a major accident if applied to the steering controls. A sudden change in wheel direction at high speed may result in a roll-over or other unsafe/uncomfortable vehicle maneuver.

In some examples, the vehicle controller 212 may apply a braking assistance function to slow but not stop the vehicle 102, until the steering correction can be safely applied. The vehicle controller 212 may actively refrain from applying a braking assistance function in leu of activating the steering assistance function to avoid the collision 208 when steering adjustments suffice.

At step 310, when the steering correction is within the safety threshold the steering assistance function is activated to adjust steering controls based on the steering correction that change the vehicle direction. Activating the steering assistance function to adjust the steering controls can be performed in various ways. FIGS. 3-2 and 3-3 illustrate two different processes 310-1 and 310-2, which may be performed separately or combined, to achieve the adjustment to the steering controls based on the steering correction determined at the step 306.

For example, the steering correction may include an estimated torque adjustment based on a current driver torque. As described in the context of the process 310-2, whether the estimated torque adjustment to the current driver torque exceeds a maximum torque limit for activating the steering assistance function may be determined (e.g., at step 326) prior to using the steering correction. The steering assistance function provided by the steering assistance module 236 may activate in response to determining that the estimated torque adjustment does not exceed the maximum torque limit. In other cases, the steering assistance module 236 may refrain from activating the steering assistance function in response to determining that the estimated torque adjustment exceeds the maximum torque limit.

In cases where the steering correction is not within the safety threshold for activating the steering assistance function, the vehicle controller 212 may perform an emergency or other collision prevention function. For example, the vehicle controller 212 may provide input to the brake interface 222. In response to the inputs to the brake interface 222, a braking assistance function is applied by brake controls of the vehicle 102, to slow the vehicle 102 to stop or until the steering correction falls within a speed threshold of the safety threshold for activating the steering assistance function.

### DETAILED PROCESS FOR ACTIVATING STEERING ASSISTANCE

FIG. 3-2 and 3-3 illustrate example processes performed in furtherance of the active steering assistance activation in the process of FIG. 3-1, specifically as examples for executing the step 306 from the process 300. Each of the processes 310-1 and 310-2 include some similar steps including a step 312, a step 314, a step 316, and a step 320. The process 310-1 includes a step 318, which is not included in the process 310-2. A step 322, a step 324, and a step 326 are additional steps of the process 310-2, which are omitted from the process 310-1. Just one of the processes 310-1 and 310-2 may be performed to execute the step 306. The processes 310-1 and 310-2 may be combined to execute the step 306 in different ways. A result from executing each of the processes 310-1 and 310-2 is evaluation and safe application of the steering correction determined at the step 306, which adjusts steering controls without adjusting vehicle speed controls or the brakes, to gracefully turn correctly to avoid the collision 208 with the road barrier 104.

At the step 312, whether curb collision steering assistance is enabled is determined. For example, the active steering assistance system 214 may be deactivated based on driver preferences input to the vehicle 102. The active steering assistance system 214 may be disable due to a malfunction, or for other reasons including when the environment 200 is a crowded traffic situation or the vehicle is moving at too high rate of speed. If driving slower than a speed threshold, or in a parking situation or turning situation, the curb collision steering assistance is enabled to prevent curb collisions predicted as the vehicle 102 maneuvers on the driving surface 204.

A No decision from the step 312 ends the processes 310-1 and 310-2 through execution of the step 320. At the step 320, when the curb collision assistance is not enabled, the vehicle controller 212 refrains from adjusting the steering controls to allow the driver freedom to steer the vehicle 102.

A Yes decision from the step 312 continues the processes 310-1 and 310-2 to cause execution of the step 314. At the step 314, when the curb collision assistance is enabled, the steering assistance module 234 may determine the steering correction estimated by the steering correction module 236. The steering correction may include an estimated steering value and a relative steering angle for that steering value. The estimated steering value is relative a current steering angle of the vehicle 102. For instance, the steering value may indicate a change (e.g., increase, decrease) to the current steering angle caused by the driver inputs to the steering controls. The vehicle controller 112 may provide the steering angle to the steering assistance module 234 and/or the steering correction module 236; the steering assistance module 234 and/or the steering correction module 236 may estimate the steering angle based on other vehicle information (e.g., speed, direction).

At step 316, which is drawn in dashed line to indicate it being optional, the steering value estimated is reduced to a maximum value that is within steering limits of the vehicle. The steering value determined at the step 314 is evaluated against limitations of the steering controls of the vehicle 102, and/or a maximum assistance limit for assisting driver steering. The estimated steering value may be set to a maximum value for that steering angle when the steering value exceeds the maximum value.

At step 318, the steering controls are adjusted to change the vehicle direction based on the steering value. For example, the steering value is output relative to a current steering angle for the vehicle controller 112 to base a steering correction that is determined for input to the steering controls of the vehicle 102. In response to the steering correction input to the steering controls, driver steering is compensated to avoid collisions with wheels and/or other parts of the vehicle 102.

Turning to FIG. 3-3, the process 310-2 includes similar or identical steps as the step 312, the step 314, and the step 316 of the process 310-1. Therefore, the description related to these steps with respect to FIG. 3-2 applies similarly to the process 310-2. However, unlike the process 310-1, where at step 318, the steering controls are adjusted to change the vehicle direction based on the steering value, a different operation is performed prior to actively assisting the driver steering controls.

At step 322, a torque adjustment for achieving the steering value given a current driver torque is estimated. For example, as opposed to a steering value, the vehicle controller 112 may process steering corrections more quickly from obtaining a steering torque to apply to the controls. The torque adjustment to cause the steering correction and achieve the steering value is determined based on the current steering angle determined at the step 314 and the reduced steering value output from the step 316.

At step 324, whether the estimated torque adjustment to the current driver torque exceeds a maximum torque limit for activating the steering assistance function is determined. A steering angle may be unachievable if too much torque is needed given a current steering angle and/or torque applied to the steering controls. The steering assistance module 234 may prevent steering corrections that cause mechanical failure due to providing too much torque correction. This may also cause injury or frighten a driver when the wheel correction is not expected, or a magnitude of the torque correction causes uncomfortable driving or a feeling of losing control.

A No decision from the step 322 ends the processes 310-2 through execution of the step 320. The vehicle controller 212 refrains from adjusting the steering controls when the steering correction is too dangerous or exceeds operating capability of the vehicle 102.

AYes decision from the step 322 continues the processes 310-2 to cause execution of the step 326. At step 318, the steering controls are adjusted to change the vehicle direction based on the estimated torque adjustment. For example, the torque adjustment is output relative to a current steering torque for the vehicle controller 112 to use to adjust the steering controls of the vehicle 102. In response to inputting a steering correction indicative of the desired torque (e.g., a combination of a current steering torque and the estimated torque adjustment), driver steering is compensated to avoid collisions with wheels and/or other parts of the vehicle 102.

A steering correction for input to the step 308 may be determined through execution of one, or a combination, of the processes 306-1 to 306-3 illustrated in FIGS. 4-1 to 4-3. The steering correction may be used at the step 308 and 310 to determine whether, and to for changing a vehicle direction on the vehicle path to prevent the collision 208.

A result from execution of each of the processes 306-1 to 306-3 is the steering correction that is applied to at the step 308 used in furtherance of other steps of the processes 300, 310-1, and 310-2. The steering correction may include an estimated a steering value that is relative to a current steering angle, which if applied to the steering controls of the vehicle 102 is predicted to change the wheel path 108 and prevent the collision 208 with the road barrier 104.

The processes 306-1 to 306-3 are described below in an increasing order of computational complexity. Some vehicles can perform more complex processes using high performance computing devices to execute the processes 306-2 and 306-3. Other classes of vehicles may lack the capability to execute these processes and instead rely on simpler technology, or slower performing computing equipment to perform the process 306-1, which is less complex than the processes 306-2 and 306-3. A steering correction output from either of the processes 306-1 to 306-3 may be updated regularly or periodically to provide the step 308 with current steering values ready to be applied if a collision becomes imminent. This allows the vehicle 102 to be prepared to apply a steering correction, almost immediately when a curb collision is predicted (e.g., seemingly in real-time) to steer the vehicle 102 to drive as far from the road barrier 104 as possible while maneuvering to turn or park.

### DETAILED PROCESSES FOR STEERING CORRECTION DETERMINATION

FIGS. 4-1 to 4-3 illustrate example processes of determining a steering correction, in accordance with the described techniques and in furtherance the active steering assistance activation in the process 300 for performing the step 306. Each of the process 306-1 to 306-3 is illustrated as a process that occurs between execution of the step 304 and the step 308 of the process 300. The processes 306-1, 306-2, and 306-3 include some same steps, which are labeled similarly across the FIGS. 4-1 to 4-3, in addition to different steps. The steps of the processes 306-1 to 306-3 may be performed in different orders than shown.

Turning first to FIG. 4-1, which illustrates one example for providing a steering correction to enable an active steering assistance function, as described throughout this disclosure. At step 400 of the process 306-1, in response to determining that the collision 208 is impending, a nearest wheel to a road barrier is determined. For example, based on curb information 402 inferred from sensor data obtained at the sensor interface 226 and/or based on vehicle data reported by the vehicle controller 212, the steering correction module 236 determines an approximate location of the collision 208 on the vehicle path 106. The steering correction module 236 can apply dimensions of the vehicle 102, an orientation, and a direction of travel on the vehicle path 106 to predict a nearest vehicle side (e.g., driver side or passenger side, left side or right side) or vehicle end (e.g., front end or rear end) as the vehicle 102 approaches the road barrier 104. Based on the approximate location of the collision 208 on the road barrier 104, the steering correction module 236 identifies a specific wheel on the side and/or end of the vehicle 102 that is closest to the predicted location of the collision 208. A wheel position of each wheel of the vehicle 102 is inferred and a distance relative to the predicted location is determined. The steering correction module 236 identifies a wheel nearest on the vehicle path 106 to the collision 208 as the wheel of the vehicle 102 with the shortest distance to the road barrier 104.

At step 406, whether the nearest wheel identified given the curb information 402 is less than a wheel threshold 404 is determined. The wheel threshold 404 may be a calibrated threshold for limiting steering corrections to occur within brief time windows or at a calibrated distance from the road barrier 104, where the steering corrections are likely effective at preventing the collision 208. This allows the driver of the vehicle 102 to have freedom to steer and drive using the driver inputs to the steering controls; steering assistance is not provided unless it is likely that the collision 208 is impending. If the distance to the nearest wheel exceeds the wheel threshold 404 (e.g., calibrated distance), then the process 306-1 returns to the step 400. At a later time, the nearest wheel is within the wheel threshold 404, and the process 306-1 continues to step 410.

At the step 410, a direction of travel on the vehicle path 106 may be inferred from vehicle data obtained from the vehicle controller 212. For example, direction information 408 may be provided as an indication of a driving mode or gear selection (e.g., park, reverse, neutral, drive, low-gear drive) on the vehicle 102. In other cases, the vehicle controller 212 determines the direction information 408 from the sensor interface 226 and/or the other vehicle systems 216. An output from the step 410 is a direction of travel (e.g., forward or reverse) on the vehicle path 106 for the nearest vehicle identified at the step 400.

Depending on the direction of travel determined at the step 410, the process 306-1 continues to one of two branches leading to step 412 or 414. Each branch of the process 306-1 determines an appropriate steering correction for avoiding the collision 208 while moving in one of the two directions of travel. The step 412 is taken when the direction information 408 indicates the direction of travel is forward. The step 414 is executed when the direction information 408 indicates the direction of travel is reverse.

At each of the steps 412 and 414, whether the nearest wheel is a front wheel or a rear wheel is determined. Then, based on whether the nearest wheel is a front or rear wheel, and whether the vehicle is moving forward or reverse, a steering correction 416 is selected. Labeled individually as steering correction 416-1, steering correction 416-2, steering correction 416-3, and steering correction 416-4, the steering correction 416 selected is to cause a change in steering angle of the vehicle 102, cause a change in trajectory and move at a different steering angle than is being commanded by driver inputs to steering controls (e.g., a steering wheel of the vehicle 102).

The steering correction 416 selected is derived based in part on a steering calibration 418 (e.g., a calibrated steering maneuver) for adjusting the steering controls of the vehicle 102 and based in part on steering limits 420 associated with the steering controls of the vehicle 102. The steering calibration 418 may define a direction and amount of steering correction defined by the steering calibration 418 for the nearest wheel and limit the steering correction 416 to not exceed safety limits or steering capability of the vehicle 102. For example, if a nearest wheel to the collision 208 is a front wheel, and the vehicle is moving in a forward direction, the steering correction 416-1 is selected to actively steer the vehicle 102 away from the road barrier 104 by turning in an opposite direction from the collision 208 by first amount of steering (e.g., degrees) determined based on the steering calibration 418 and the steering limits 420. If the nearest wheel to the collision 208 is a rear wheel, and the vehicle is moving in the forward direction, the steering correction 416-2 is selected to actively steer the vehicle 102 away from the road barrier 104 by turning in the opposite direction from the collision 208 by a second amount of steering, which may be different from the first amount associated with the steering correction 416-1 and determined based on the steering calibration 418 and the steering limits 420.

If in other situations, when the nearest wheel is a front wheel and the vehicle 102 is moving in the reverse direction, instead of steering away from the road barrier 104 to prevent the collision, the steering correction 416-3 is selected to actively steer the vehicle 102 towards the road barrier 104 to prevent the collision 208. The steering correction 416-3 causes the vehicle 102 to turn the nearest wheel in the direction towards the road barrier 104, and with a third amount of correction determined based on the steering calibration 418 and the steering limits 420. The third amount of steering may be different than the first or second amounts.

Lastly, when the nearest wheel is a rear wheel and the vehicle 102 is moving in the reverse direction, the steering correction 416-4 is selected. Selection of the steering correction 416-4 causes the vehicle 102 to actively steer away from the road barrier 104 by turning in the opposite direction from the road barrier 104. The steering correction 416-4 indicates a fourth amount of correction, which may be different than any of the other steering corrections 416-1 to 416-3, determined based on the steering calibration 418 and the steering limits 420.

The steering correction 416 that is selected based on vehicle direction and identifying the nearest wheel to the road barrier 104 is output to the step 308. The steering correction 416 is used by the vehicle controller 212 to actively adjust the steering controls to be based on driver inputs, which are compensated to prevent the collision 208.

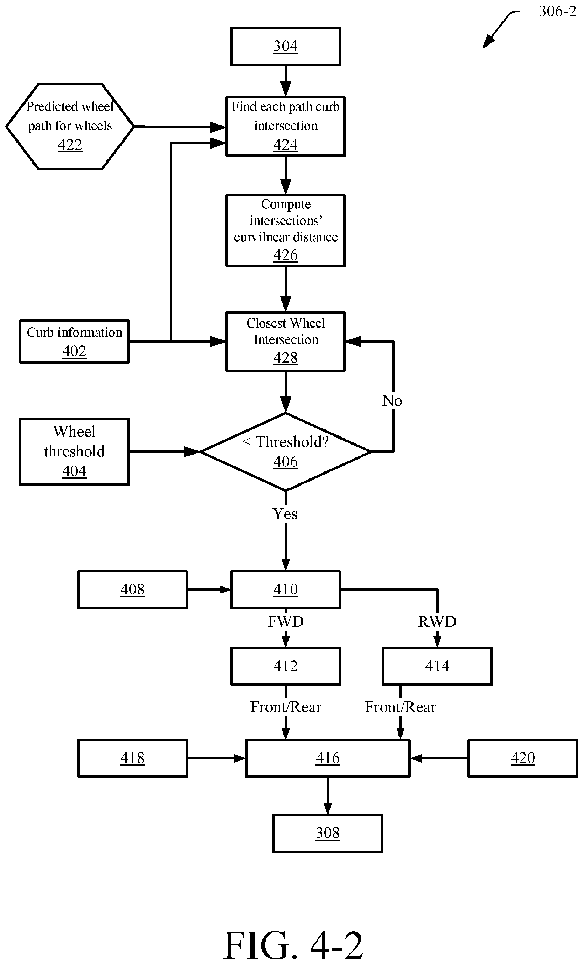

A slightly more complex steering assist process using predicted wheel paths is provided in FIG. 4-2, with illustration of the process 306-2. In the process 306-2, predicted wheel paths for all wheels are determined to project more accurate steering corrections based on heading and/or vehicle trajectory, when collisions are impending. The process 306-2 may be executed on a more complex version of the vehicle architecture 210, where the processor 230 can perform the operations described below in combination with the vehicle controller 212 and the other vehicle systems 216 without delay in preventing the collision 208.

At step 422, the predicted wheel paths of each wheel of the vehicle 102 are determined. For example, existing techniques for predicting wheel trajectory along the vehicle path 106 can be used to identify specific trajectories for each individual wheel, as opposed to inferring a closing distance of each wheel to the road barrier 104 based on overall vehicle trajectory, as is performed in the process 306-1.

At step 424, the predicted wheel paths from the step 422 are evaluated with the curb information 402 to find a predicted intersection path for each wheel and the road barrier 104. For instance, sensors of the vehicle 102 may detect the road barrier 104 in a field of view and provide an indication of a collision location to the curb at the sensor interface 226. The vehicle controller 212 can execute functions that predict each wheel path given current trajectory and locations of nearby objects and provide that intersection path to the steering correction module 236. The location of the collision 208 may be identified by the vehicle controller 212 and/or the steering correction module 236 and provided in a vehicle coordinate system or vehicle frame of reference.

At step 426 a curvilinear distance of each intersection determined at the step 424 is determined. For example, in response to defining the road barrier 104 relative a vehicle coordinate frame and based on the predicted wheel paths estimated from current steering angles of the wheels, the intersections determined at the step 424 are ranked in order of nearest to furthest from the road barrier 104 and the collision 208.

Then, similar to the step 400 where the closest wheel is determined, a closest wheel intersection is determined at step 428 based on the curvilinear distance computed relative to the curb information 402.

From the step 428, the process 306-2 is similar to the process 306-1. For example, at step 406, whether the nearest wheel intersection is less than the wheel threshold 404 is determined for limiting steering corrections to occur only when they are likely to prevent the collision 208 that is turned impending. The process 306-2, like the process 306-1, still provided freedom for the driver of the vehicle 102 to steer without any assistance, until the assistance is necessary. If the distance to the nearest wheel intersection exceeds the wheel threshold 404 (e.g., calibrated distance), then the process 306-2 returns to the step 428. At a later time, the nearest wheel intersection may be within the wheel threshold 404, and the process 306-2 continues to step 410 and the other steps 412 and 414 to provide the steering correction 416 as an input to the step 308.

At the step 410, a direction of travel on the vehicle path 106 may be inferred from vehicle data obtained from the vehicle controller 212. For example, direction information 408 may be provided as an indication of a driving mode or gear selection (e.g., park, reverse, neutral, drive, low-gear drive) on the vehicle 102. In other cases, the vehicle controller 212 determines the direction information 408 from the sensor interface 226 and/or the other vehicle systems 216. An output from the step 410 is a direction of travel (e.g., forward or reverse) on the vehicle path 106 for the nearest vehicle identified at the step 400.

Depending on the direction of travel determined at the step 410, the process 306-1 continues to one of two branches leading to step 412 or 414. Each branch of the process 306-1 determines an appropriate steering correction for avoiding the collision 208 while moving in one of the two directions of travel. The step 412 is taken when the direction information 408 indicates the direction of travel is forward. The step 414 is executed when the direction information 408 indicates the direction of travel is reverse.

At each of the steps 412 and 414, whether the nearest wheel intersection involves a front wheel or a rear wheel is determined. Then, based on whether the nearest wheel intersection involves a front or rear wheel, and whether the vehicle is moving forward or reverse, a steering correction 416 is selected.

The steering correction 416 that is selected based on vehicle direction and from identifying the nearest wheel intersection to the road barrier 104 is output to the step 308. The steering correction 416 is used by the vehicle controller 212 to actively adjust the steering controls to be based on driver inputs, while further compensating the driver inputs with the steering correction 416 to prevent the collision 208.

### ADAPTIVE WHEEL PATH STEERING PRECISION

FIG. 4-3 illustrates a slightly more complex steering assist process than the processes 306-1 and 306-2, which proactively predicts wheel paths and steering corrections in the event they are needed to prevent the collision 208. The difference between the process 306-2 and 306-3 is in the output of the steering correction 416, which is modified or adjusted, before being sent to the step 308. That is, rather than rely on the steering calibration 418 and/or the steering limits 420 to determine an initial steering correction 416, the steering correction 416 is computed from additional information and using other logic.

At step 430, the steering correction 416 indicates a direction relative to the road barrier 104 to turn a wheel with a nearest wheel intersection to the collision 208. A steering range for that wheel is determined by discretizing the steering range into small steering angle increments.

At step 432, the steering limits 420 are used with the discretized steering range to form a subset of steering angles, ranging from a current angle to a maximum steering angle in the direction determined initially with the steering correction 416.

At step 324, the subset of steering angles are checked with the nearest wheel intersection determined at the step 428 and the curb information 402 to determine whether a steering correction can prevent the collision 208.

At step 326, for each candidate steering angle in the subset, a corrected wheel path from applying that steering angle correction is determined.

At step 328, whether the corrected wheel path determined at the step 326 prevents the collision 208 is determined. If the collision 208 is not prevented, the next candidate steering angle in the subset is tested to see if the collision 208 is prevented.

In response to determining at the step 328 that the steering angle provides a corrected wheel path to prevent the collision 208, the steering correction 416 is modified to reflect the specific steering angle to apply to prevent the nearest wheel from intersecting with the road barrier 104 is output to the step 308. The steering correction 416 is used by the vehicle controller 212 to actively adjust the steering controls to be based on driver inputs, while further compensating the driver inputs with the steering correction 416 to prevent the collision 208.

### ADDITIONAL EXAMPLES

In the following section, some additional examples are provided.
Example 1: A method comprising: detecting, from a host vehicle that is moving on a vehicle path, a road barrier having a shorter height relative to a driving surface than a height of a vehicle wheel; determining whether a collision is predicted between the road barrier and the host vehicle; determining a steering correction for changing a vehicle direction on the vehicle path to prevent the collision; determining whether the steering correction is within a safety threshold for activating a steering assistance function to avoid the road barrier; and activating the steering assistance function when the steering correction is within the safety threshold to adjust steering controls that change the vehicle direction based on the steering correction.
Example 2: The method of any preceding example, wherein the steering correction comprises an estimated steering value and a relative steering angle.
Example 3: The method of any preceding example, wherein the estimated steering value comprises a maximum value for that steering angle when the steering value exceeds the maximum value.
Example 4: The method of any preceding example, wherein the steering correction comprises an estimated torque adjustment to a current driver torque, and the method further comprises: determining whether the estimated torque adjustment to the current driver torque exceeds a maximum torque limit for activating the steering assistance function prior to activating the steering assistance function.
Example 5: The method of any preceding example, wherein the method further comprises: activating the steering assistance function in response to determining that the estimated torque adjustment does not exceed the maximum torque limit.
Example 6: The method of any preceding example, wherein the method further comprises: refraining from activating the steering assistance function in response to determining that the estimated torque adjustment exceeds the maximum torque limit.
Example 7: The method of any preceding example, wherein determining the steering correction comprises: determining a closest wheel to the road barrier; and responsive to determining that the closest wheel is within a wheel threshold for active steering, determining the steering correction for changing a steering angle of the closest wheel to avoid the collision.
Example 8: The method of any preceding example, wherein determining the steering correction comprises: determining a closest wheel intersection to the road barrier; and responsive to determining that the closest wheel intersection is within a wheel threshold for active steering, determining the steering correction for changing direction of the closest wheel intersection to avoid the collision.
Example 9: The method of any preceding example, further comprising: determining a curvilinear distance of each wheel intersection predicted with the road barrier; and determining the closest wheel intersection based on a shortest distance among all curvilinear distances determined.
Example 10: The method of any preceding example, wherein determining the steering correction comprises: selecting the steering correction based on: whether a closest wheel or closest wheel intersection is associated with a front wheel or a rear wheel; and whether a direction of the vehicle is a forward direction or a reverse direction.
Example 11: The method of any preceding example, wherein determining the steering correction comprises: selecting the steering correction to turn in an opposite direction from the road barrier if a nearest wheel or nearest wheel intersection is associated with a rear wheel moving in a forward or reverse direction, or a front wheel moving in the forward direction; and selecting the steering correction to turn towards the road barrier if the nearest wheel or the nearest wheel intersection is associated with the front wheel moving in the reverse direction.
Example 12: The method of any preceding example, wherein determining the steering correction comprises: selecting the steering correction based on a calibrated steering amount or distance, and limitations of the steering controls.
Example 13: The method of any preceding example, wherein determining the steering correction comprises: selecting the steering correction in response to testing a subset of multiple steering corrections to identify one of the multiple steering corrections that does not result in the collision.
Example 14: The method of any preceding example, further comprising: forming the subset of the multiple steering corrections based on discretizing a steering range into a series of potential small angle adjustments that are tested to identify the steering correction that prevents the collision.
Example 15: The method of any preceding example, further comprising: determining that the steering correction is not within the safety threshold for activating the steering assistance function; and applying a braking assistance function to apply brake controls to slow the host vehicle until the steering correction is within the safety threshold for activating the steering assistance function.
Example 16: The method of any preceding example, further comprising: refraining from applying a braking assistance function in response to activating the steering assistance function.
Example 17: The method of any preceding example, further comprising: determining a vehicle speed at the collision; and determining whether the steering correction is within the safety threshold for activating the steering assistance function by determining whether the vehicle speed satisfies a slow-speed threshold for activating the steering assistance function.
Example 18: The method of any preceding example, further comprising: determining a vehicle speed at the collision, wherein determining the steering correction is based in part on the vehicle speed, and the safety threshold is set based on the vehicle speed.
Example 19: The method of any preceding example, wherein the road barrier comprises a stationary portion of a curb that designates a physical boundary between the driving surface and a pedestrian path, an unpaved region, or another driving surface for another vehicle path or lane.
Example 20: The method of any preceding example, wherein the road barrier is shorter than a ground clearance or a vehicle bumper.
Example 21: A system comprising a device configured to perform the method of any preceding example.
Example 22: A system comprising at least one processor configured to perform the method of any preceding example.
Example 23: A system comprising means for performing the method of any preceding example.
Example 24: A non-transitory computer-readable storage medium comprising instructions that, when executed, cause at least one processor to execute the method of any preceding example.

### CONCLUSION

While various embodiments of the disclosure are described in the foregoing description and shown in the drawings, it is to be understood that this disclosure is not limited thereto but may be variously embodied to practice within the scope of the following claims. From the foregoing description, it will be apparent that various changes may be made without departing from the scope of the disclosure as defined by the following claims.

## Claims

1. A system for vehicle active steering, the system comprising at least one processor configured to:
detect, from a host vehicle that is moving on a vehicle path, a road barrier having a shorter height relative to a driving surface than a height of a vehicle wheel;
determine whether a collision is predicted between the road barrier and the host vehicle;
determine a steering correction for changing a vehicle direction on the vehicle path to prevent the collision;
determine whether the steering correction is within a safety threshold for activating a steering assistance function to avoid the road barrier; and
activate the steering assistance function when the steering correction is within the safety threshold to adjust steering controls that change the vehicle direction based on the steering correction.

2. The system of claim 1, wherein the steering correction comprises an estimated steering value and a relative steering angle.

3. The system of claim 2, wherein the estimated steering value comprises a maximum value for that steering angle when the steering value exceeds the maximum value.

4. The system of any of claims 1-3, wherein:
the steering correction comprises an estimated torque adjustment to a current driver torque; and
when the processor is configured to determine whether the estimated torque adjustment to the current driver torque exceeds a maximum torque limit for activating the steering assistance function prior to activating the steering assistance function.

5. The system of claim 4, wherein the processor is configured to activate the steering assistance function in response to determining that the estimated torque adjustment does not exceed the maximum torque limit.

6. The system of claim 4 or 5, wherein the processor is configured to refrain from activating the steering assistance function in response to determining that the estimated torque adjustment exceeds the maximum torque limit.

7. The system of any of claims 1-6, wherein the processor is configured to determine the steering correction for changing a vehicle direction on the vehicle path to prevent the collision by at least:
determining a closest wheel to the road barrier; and
responsive to determining that the closest wheel is within a wheel threshold for active steering, determining the steering correction for changing a steering angle of the closest wheel to avoid the collision.

8. The system of any of claims 1-7, wherein the processor is configured to determine the steering correction for changing a vehicle direction on the vehicle path to prevent the collision by at least:
determining a closest wheel intersection to the road barrier; and
responsive to determining that the closest wheel intersection is within a wheel threshold for active steering, determining the steering correction for changing direction of the closest wheel intersection to avoid the collision.

9. The system of claim 8, wherein the processor is configured to:
determine a curvilinear distance of each wheel intersection predicted with the road barrier; and
determine the closest wheel intersection based on a shortest distance among all curvilinear distances determined.

10. The system of any of claims 1-9, wherein the processor is configured to determine the steering correction by at least:
selecting the steering correction based on:
whether a closest wheel or closest wheel intersection is associated with a front wheel or a rear wheel; and
whether a direction of the vehicle is a forward direction or a reverse direction.

11. The system of any of claims 1-10, wherein the processor is configured to determine the steering correction by at least:
selecting the steering correction to turn in an opposite direction from the road barrier if a nearest wheel or nearest wheel intersection is associated with a rear wheel moving in a forward or reverse direction, or a front wheel moving in the forward direction; and
selecting the steering correction to turn towards the road barrier if the nearest wheel or the nearest wheel intersection is associated with the front wheel moving in the reverse direction.

12. The system of any of claims 1-11, wherein the processor is configured to determine the steering correction by selecting the steering correction based on a calibrated steering amount or distance, and limitations of the steering controls.

13. The system of any of claims 1-12, wherein the processor is configured to determine the steering correction by selecting the steering correction in response to testing a subset of multiple steering corrections to identify one of the multiple steering corrections that does not result in the collision.

14. The system of any of claims 1-13, wherein the processor is configured to:
form the subset of the multiple steering corrections based on discretizing a steering range into a series of potential small angle adjustments that are tested to identify the steering correction that prevents the collision.

15. The system of any of claims 1-14,
wherein the processor is configured to:
determine that the steering correction is not within the safety threshold for activating the steering assistance function;
apply a braking assistance function to apply brake controls to slow the host vehicle until the steering correction is within the safety threshold for activating the steering assistance function; and
refrain from applying the braking assistance function in response to activating the steering assistance function, and
wherein the road barrier is shorter than a ground clearance or a vehicle bumper, and the road barrier comprises a stationary portion of a curb that designates a physical boundary between the driving surface and a pedestrian path, an unpaved region, or another driving surface for another vehicle path or lane.
